(19) Europäisches Patentamt
European Patent Office
Office européen des brevets

(11) **EP 0 962 792 B1**

(12) **FASCICULE DE BREVET EUROPEEN**

(45) Date de publication et mention
de la délivrance du brevet:
**10.12.2008 Bulletin 2008/50**

(51) Int Cl.:
***G02B 6/293*** *(2006.01)*   ***G01J 3/22*** *(2006.01)*

(21) Numéro de dépôt: **99401223.5**

(22) Date de dépôt: **20.05.1999**

(54) **Multiplexeur compact**

Kompakter Multiplexer

Compact multiplexer

(84) Etats contractants désignés:
**DE FR GB**

(30) Priorité: **04.06.1998 FR 9807046**

(43) Date de publication de la demande:
**08.12.1999 Bulletin 1999/49**

(73) Titulaire: **YENISTA OPTICS SA**
**22300 Lannion (FR)**

(72) Inventeur: **Laude, Jean-Pierre**
**91690 Saint cyr la Riviere par Saclas (FR)**

(74) Mandataire: **Maillet, Alain et al**
**Cabinet Le Guen & Maillet**
**5, place Newquay**
**B.P. 70250**
**35802 Dinard Cedex (FR)**

(56) Documents cités:
**EP-A- 0 196 963**   **US-A- 4 559 500**
**US-A- 5 278 687**

• **PATENT ABSTRACTS OF JAPAN vol. 011, no. 374 (E-562), 5 décembre 1987 (1987-12-05) & JP 62 142426 A (MATSUSHITA ELECTRIC IND CO LTD), 25 juin 1987 (1987-06-25)**

**Description**

La présente invention concerne un multiplexeur-démultiplexeur ou un routeur en longueur d'onde à fibres optiques, susceptible d'être utilisé comme composant dans les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963 qui sont commercialisés sous la dénomination « STIMAX ». Le document EP-A-0 196 963 divulgue un multiplexeur-démultiplexeur en longueur d'onde à fibres optiques ayant un axe optique et comportant au moins une fibre d'entére ayant une face de sortie, au moins une fibre de sortie ayant une face d'entrée, un miroir concave dont le foyer est placé au niveau des extrémités des fibres d'entrée et de sortie et un réseau de diffraction placé entre l'extrémité des fibres et le miroir concave.

Ce dernier document concerne plus particulièrement un multiplexeur-démultiplexeur dans lequel les fibres d'entrée et de sortie sont positionnées au voisinage immédiat du foyer d'un miroir concave. Ainsi, les flux lumineux divergents reçus des fibres d'entrée sont transformés par le miroir concave en des faisceaux de lumière parallèles qui sont adressés sur un réseau de diffraction plan, qui dirige les faisceaux parallèles en retour vers le miroir concave et qui les focalise sur les extrémités des fibres de sortie. Le réseau fonctionne donc selon la configuration de Littrow.

Dans un tel dispositif, la relation suivante est approximativement vérifiée :

$$2a \sin\beta = \frac{k\lambda}{n}$$

où a est le pas du réseau, β est l'angle de Littrow, c'est-à-dire l'angle formé par le faisceau lumineux (incident et réfracté) avec la normale au plan du réseau, k est l'ordre de réfraction, λ la longueur d'onde et n l'indice du milieu au contact du réseau.

De manière connue, au voisinage des conditions de Littrow, la dispersion angulaire $\frac{d\beta}{d\lambda}$ est d'autant plus grande que β est élevé.

La dispersion spectrale $\frac{dx}{d\lambda}$ est égale à $f\frac{d\beta}{d\lambda}$ où f est la distance focale du système réflecteur et x la direction de dispersion dans son plan focal. Une grande dispersion angulaire $\frac{d\beta}{d\lambda}$ permet donc à dispersion spectrale $\frac{dx}{d\lambda}$ constante de diminuer la focale f.

Pour une distance latérale donnée entre fibres, la séparation en longueur d'onde des différents canaux est aussi conservée pour une focale f réduite.

On constate toutefois que l'augmentation de l'angle de Littrow conduit à incliner le réseau et rend difficile le positionnement des extrémités des fibres optiques.

On entend ici par multiplexeur-démultiplexeur à fibres optiques, des dispositifs dans lesquels les ondes lumineuses d'entrée et de sortie sont propagées par des fibres optiques.

L'invention concerne également les routeurs à fibres optiques dans lesquels un nombre variable de flux d'entrée, ayant chacun une longueur d'onde particulière, propagés par des fibres optiques spatialement distinctes, sont adressés sur un nombre éventuellement différent de fibres de sorties.

Pour simplifier la description, le dispositif de l'invention sera qualifié de multiplexeur-démultiplexeur, étant bien entendu qu'il peut s'agir d'un multiplexeur, d'un démultiplexeur ou d'un routeur.

Les dispositifs connus donnent globalement satisfaction et ont permis la réalisation de liaisons multiplexées associant un grand nombre de voies avec une faible diaphonie.

Toutefois, compte tenu de l'extension de leurs utilisations, il est maintenant recherché d'améliorer leurs performances et, en particulier, de diminuer la distance spectrale entre deux voies (deux longueurs d'onde consécutives), tout en gardant des dispositifs d'encombrement limité, c'est-à-dire avec une focale limitée.

Le but de l'invention est donc de proposer un multiplexeur-démultiplexeur compact dont les propriétés sont équivalentes ou améliorées par rapport à celles des dispositifs antérieurs et la diaphonie limitée.

A cet effet, l'invention concerne un multiplexeur-démultiplexeur en longueur d'onde à fibres optiques ayant un axe optique et comportant un réseau de diffraction ayant un plan de dispersion, au moins une fibre d'entrée ayant une face de sortie; au moins une fibre de sortie ayant une face d'entrée, des moyens de conjugaison optique de la face de sortie de la fibre d'entrée avec la face d'entrée de la fibre de sortie assurant le fonctionnement du réseau en configuration de Littrow.

Selon l'invention, lesdits moyens de combinaison optique comportent des moyens réfléchissants permettant un angle de Littrow élevé et assurant le repliement de l'axe optique.

Dans les différents modes de réalisation présentant chacun leurs avantages respectifs et susceptibles d'être associés selon de nombreuses combinaisons techniquement possibles :

- les moyens de conjugaison optique ont un axe d'entrée et de sortie au voisinage duquel se trouvent la face de sortie de la fibre d'entrée et la face d'entrée de la fibre de sortie et les moyens réfléchissants sont constitués par un miroir placé sur ledit axe comportant une ouverture centrale permettant le passage d'un flux lumineux dirigé sur cet axe ;
- le miroir est placé au niveau de la face de sortie de la fibre d'entrée ;
- le système dispersif est un réseau de diffraction plan, dont le plan est parallèle à l'axe d'entrée et de sortie des moyens de conjugaison optique ;
- le multiplexeur-démultiplexeur est composé d'un ensemble d'éléments optiques associés, le réseau de diffraction étant fixé sur une face latérale d'un élément ayant un axe parallèle à l'axe d'entrée et de sortie des moyens de conjugaison ;
- les éléments optiques sont collés ;
- le réseau de diffraction est fixé sur lesdits éléments par des jonctions élastiques ;
- le multiplexeur-démultiplexeur est composé d'un ensemble d'éléments optiques associés et le réseau de diffraction est directement formé sur l'une des faces latérales de l'un de ces éléments optiques ;
- le réseau de diffraction est porté sur un support pouvant être dilaté de façon à faire varier le pas du réseau ;
- le support du réseau est diélectrique.

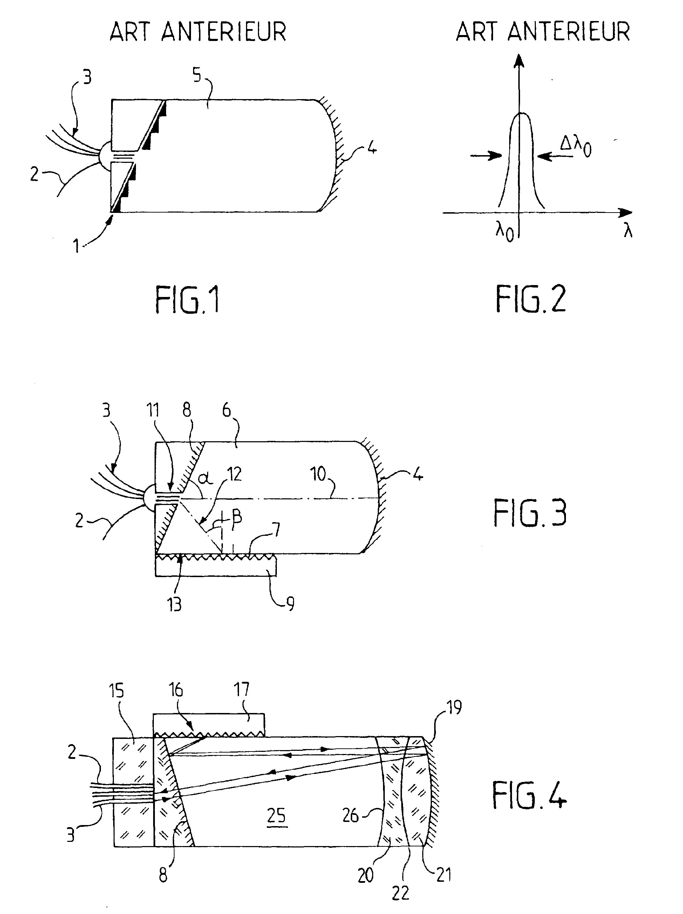

L'invention sera décrite plus en détail en référence aux dessins dans lesquels la Figure 1 est une représentation d'un multiplexeur-démultiplexeur de l'art antérieur.

La Figure 2 est la fonction de transfert élémentaire pour un couple de fibres entrée-sortie du dispositif de la Figure 1.

La Figure 3 est un multiplexeur-démultiplexeur selon l'invention.

La Figure 4 est un multiplexeur-démultiplexeur, selon l'invention, stabilisé en température.

Les Figures représentent les composants optiques du dispositif de l'invention, indépendamment des structures mécaniques qui les portent et assurent leurs positionnements respectifs. Ces structures mécaniques peuvent revêtir de nombreuses formes et sont accessibles à l'homme du métier.

La présente description est faite par référence à l'utilisation de fibres optiques comme moyens d'entrée et de sortie du multiplexeur-démultiplexeur. Il est toutefois bien connu qu'il existe des composants émetteurs (diodes, barrettes ou matrices de diodes) et des composants récepteurs (CCD - Charge Coupled Device - barrettes ou matrices de CCD) dont les éléments actifs sont de petites dimensions, du même ordre de grandeur que les coeurs de fibres, de quelques microns à quelques dizaines de microns, et régulièrement répartis, dont les caractéristiques les rendent compatibles avec les fibres. Dans certaines applications, de tels composants peuvent remplacer les fibres en entrée ou en sortie du multiplexeur-démultiplexeur de l'invention et être placés à la place des extrémités desdites fibres directement au foyer spectral. De tels composants sont donc équivalents aux fibres dans la définition de l'invention.

La description ci-après fait référence à un multiplexeur-démultiplexeur. Il est également possible de mettre en oeuvre l'invention pour réaliser un routeur.

Le multiplexeur-démultiplexeur représenté sur la Figure 1 comporte un système dispersif constitué par un réseau 1, une fibre d'entrée 2 qui alimente le dispositif en un flux lumineux multiplexé et un peigne de fibres de sortie 3 qui fournit des flux différenciés pour chacune des longueurs d'onde. Les extrémités de ces fibres 3, en nombre variable, sont placées au centre du réseau 1, lui-même approximativement au foyer d'un système optique réfléchissant 4. L'espace 5 situé entre le réseau 1 et le miroir 4 peut recevoir différents composants optiques permettant en fonction des besoins, d'améliorer les propriétés du système. Le réseau 1 peut être holographique ou gravé.

Pour un tel système, la fonction de transfert élémentaire définissant la bande passante en longueur d'onde pour un couple fibre d'entrée - fibre de sortie, correspondant à une longueur d'onde $\lambda_o$, a la forme représentée sur la Figure 2. Elle est centrée sur la longueur d'onde $\lambda_o$ et sa largeur à mi-hauteur est $\Delta\lambda_o$. Cette largeur à mi-hauteur dépend de l'ensemble des caractéristiques géométriques et optiques du dispositif.

La diaphonie est l'effet produit par un risque de recouvrement des fonctions de transfert, respectivement associées à deux longueurs d'onde $\lambda_1$ et $\lambda_2$ proches l'une de l'autre.

Le multiplexeur-démultiplexeur de l'invention est plus particulièrement présenté sur la Figure 3. La fibre d'entrée 2 et les fibres de sortie 3 ont leurs extrémités placées au foyer du miroir sphérique 4. Ainsi, le flux lumineux émis par la fibre d'entrée 2 est transformée par le miroir 4 en un flux parallèle et qui est réfléchi par le miroir 8 incliné d'un angle a par rapport à l'axe 10 d'entrée-sortie du flux lumineux. Ce faisceaux parallèle est donc réfléchi par le miroir 8 en un faisceau parallèle secondaire d'axe 12. Le réseau de diffraction 7 porté par un support de réseau 9 est appliqué contre l'une des faces 13 latérales planes du multiplexeur, la normale au plan du réseau étant comprise dans le plan formé par l'axe d'entrée-sortie 10 et la normale au miroir 8. Le faisceau secondaire 12 forme un angle $\beta$ avec la normale au réseau (angle de Littrow). $\alpha$ et $\beta$ sont liés par la relation

$$\alpha = \frac{\beta + 90}{2}.$$

Afin d'assurer le fonctionnement convenable du dispositif et la transmission du flux lumineux d'une part, depuis la fibre d'entrée 2 et, d'autre part, vers les fibres de sortie 3, le miroir 8 est percé d'une ouverture centrale 11. Cette ouverture centrale de faible dimension permet donc la transmission des flux lumineux depuis ou vers les fibres sans perturber de manière significative la réflexion du faisceau parallèle réfléchie par le miroir sphérique 4.

Le faisceau lumineux incident sur le réseau 7 est diffracté, réfléchi en retour par le miroir 8 et focalisé en retour également par le miroir sphérique 4 vers les fibres de sortie 3, en fonction de la longueur d'onde du flux lumineux.

On comprend qu'ainsi, en raison du repliement du faisceau lumineux parallèle, il est possible de choisir un angle β élevé, tout en conservant une valeur également élevée pour α, angle formé par l'axe des extrémités des fibres avec le miroir. Il en résulte que, en même temps que la valeur élevée de β permet d'augmenter la dispersion angulaire, la valeur élevée de a facilite le positionnement des extrémités des fibres 2, 3 au foyer du miroir sphérique 4.

A titre d'exemple, précisons que de bons résultats ont été obtenus avec des composants en silice, un miroir sphérique de rayon R≅96 mm, une section carrée 20mmx20mm du bloc 6, un réseau 7 ayant un pas correspondant à 300 traits au mm, un angle de α≅65° et donc un angle β ≅ 40°. La longueur D est de l'ordre de 50 mm. Ce système travaille dans l'ordre 4 du réseau.

Le corps 6 du multiplexeur-démultiplexeur peut être réalisé de manière à assurer une correction thermique. En particulier, la mise en oeuvre d'un élément 6 en silice LF5 permet d'obtenir une très bonne stabilité entre - 20°C et + 60°C.

Toutefois, cette disposition n'est pas absolument nécessaire et pour des utilisations moins contraignantes, par exemple lorsque la stabilisation thermique est assurée par des moyens extérieurs, il est possible d'utiliser un multiplexeur-démultiplexeur en silice pur ou en un autre matériau optique transparent.

Le réseau 7 est donc selon l'invention, placé sur une face plane latérale du multiplexeur. Il peut être rapporté sur celle-ci après avoir été moulé sur un support 9. Le support 9 est alors collé sur la face 13 du multiplexeur-démultiplexeur ou fixé par des jonctions élastiques de préférence en trois points.

Il est également possible de réaliser le réseau directement sur la face 13 du support 9, le réseau y est alors formé de manière classique à partir d'une matrice donnant sa forme à une résine préalablement déposée sur le support ou face latérale 13. Le réseau ainsi formé avec les précautions d'usage permettant le démoulage dans de bonnes conditions est ensuite recouvert d'un traitement réflecteur puis protégé par un vernis.

On peut aussi réaliser un multiplexeur-démultiplexeur stabilisé en température, en silice connue sous la dénomination LF5 avec les valeurs de paramètres suivantes : rayon du miroir sphérique 4≅109 mm, angle α≅63° donc β≅38°, longueur D≅55 mm. Les autres paramètres ont les mêmes valeurs que dans l'exemple précédent.

En vue de réaliser un multiplexeur-démultiplexeur qui présente à la fois les propriétés recherchées et une bonne stabilité en température, on pourra mettre en oeuvre un doublet optique tel que proposé dans la demande de brevet français FR-97.07128.

Ainsi, par exemple, le multiplexeur-démultiplexeur représenté sur la Figure 4 comporte un porte-fibre 15 fixant la fibre d'entrée 2 et les fibres de sortie 3.

Un élément dispersif 16, ici un réseau, est porté par un support de réseau 17. Le porte-fibre 15 et le support de réseau 17 sont en contact par une interface 18.

Le miroir 19 réfléchit les rayonnements qu'il reçoit, il est solidaire d'un doublet, composé de deux éléments 20 et 21 associés par une interface 22.

Le flux lumineux entrant produit par la fibre optique d'entrée 2, après réfraction par le dioptre 18, et sur la zone centrale 13 de l'élément diffractant 16 et, après réfraction par le doublet 20, 21, est réfléchi par le miroir 19 vers l'élément diffractant 16. Il est diffracté par cet élément diffractant 16, cette diffraction dépendant de la longueur d'onde du flux considéré.

Les flux diffractés sont à nouveau réfléchis par le miroir 19 et, selon leur longueur d'onde, couplés aux fibres de sortie 3.

Les indices et rayons de courbure du doublet 20, 21 sont déterminés de telle sorte qu'il assure la correction des aberrations géométriques et chromatiques de l'ensemble.

L'espace 25 entre l'élément diffractant 16 et le premier dioptre 26 du doublet réflecteur est occupé par de l'air ou par un gaz, ou le vide.

Les propriétés du doublet achromatique réflecteur sont de préférence les suivantes :

Le premier élément 21 portant le miroir réfléchissant 19 est réalisé dans un verre connu sous la référence BaF52, son épaisseur au centre est de 7,66 mm, la courbure de sa face portant le miroir est de 401,56 mm et la courbure de sa deuxième face est de 748,90 mm.

Le deuxième élément 20 de ce doublet est réalisé dans un verre connu sous la référence PSK3, la courbure de sa deuxième face est de 217,77 mm, la distance entre l'interface 22 et le miroir réfléchissant est de 271,6 mm. Le matériau de l'élément 17 portant le réseau est de la silice. La distance de la face 28 à l'extrémité du porte filtre est de 21,49 mm.

Dans ce mode de réalisation selon la Figure 4, la distance moyenne entre les interfaces 23 et 18 est 22 mm et la distance entre 23 et le miroir réfléchissant est de 271,1 mm.

L'assemblage entre les deux sous-ensembles, celui portant le réseau et celui portant le doublet réflecteur, est effectué à l'aide d'un tube à section carrée de silice ou autre matériau à faible coefficient de dilatation sur lequel s'appuient les faces 16 et 26.

**Revendications**

1. Multiplexeur-démultiplexeur en longueur d'onde à fibres optiques ayant un axe optique (10) et comportant:

   - un réseau de diffraction plan (7) ayant un plan de dispersion,
   - au moins une fibre d'entrée (2) ayant une face de sortie,
   - au moins une fibre de sortie (3) ayant une face d'entrée, et
   - des moyens de conjugaison optique de la face de sortie de la fibre d'entrée (2) avec la face d'entrée de la fibre de sortie (3), lesdits moyens de conjugaison optique comportant des moyens réfléchissants assurant le fonctionnement du réseau en configuration de Littrow et assurant le repliement de l'axe optique,

   le multiplexeur-démultiplexeur étant **caractérisé en ce que**
   les moyens de conjugaison optique ont un axe d'entrée et de sortie au voisinage duquel se trouvent la face de sortie de la fibre d'entrée et la face d'entrée de la fibre de sortie,
   **en ce que** les moyens réfléchissants comprennent:

   - un premier miroir (4, 19) dont le foyer est placé au niveau de l'extrémité des fibres d'entrés (2) et de sorties (3), transformant un flux lumineux divergent en un flux de lumière parallèle,
   - un deuxième miroir (8) placé sur l'axe d'entrée et de sortie des moyens de conjugaison optique entre l'extrémité des fibres et le premier miroir (4, 19), incliné par rapport audit axe et comportant une ouverture centrale permettant le passage d'un flux lumineux dirigé sur cet axe, et

   **en ce que** le plan du réseau de diffraction est parallèle à l'axe d'entrée et de sortie des moyens de conjugaison optique.

2. Multiplexeur-démultiplexeur en longueur d'onde à fibres optiques selon la revendication 1, **caractérisé en ce que** le premier miroir (4, 19) est un miroir sphérique.

3. Multiplexeur-démultiplexeur en longueur d'onde à fibres optiques selon la revendication 2, **caractérisé en ce que** le miroir sphérique (19) est solidaire d'un doublet, composé de deux éléments (20, 21) en contact par une interface (22) et assurant la correction des aberrations géométriques et chromatiques.

4. Multiplexeur-démultiplexeur en longueur d'onde à fibres optiques selon l'une des revendications 1 à 3, **caractérisé en ce que** le multiplexeur-démultiplexeur est composé d'un ensemble d'éléments optiques associés, le réseau de diffraction étant fixé sur une face latérale d'un élément ayant un axe parallèle à l'axe d'entrée et de sortie des moyens de conjugaison optique.

5. Multiplexeur-démultiplexeur en longueur d'onde à fibres optiques selon la revendication 4, **caractérisé en ce que** les éléments optiques sont collés.

6. Multiplexeur-démultiplexeur en longueur d'onde à fibres optiques selon la revendication 4, **caractérisé en ce que** le réseau de diffraction est fixé sur lesdits éléments par des jonctions élastiques.

7. Multiplexeur-démultiplexeur en longueur d'onde à fibres optiques selon l'une des revendications 1 à 3, **caractérisé en ce que** le multiplexeur-démultiplexeur est composé d'un ensemble d'éléments optiques associés et que le réseau de diffraction est directement formé sur l'une des faces latérales de l'un de ces éléments optiques.

8. Multiplexeur-démultiplexeur en longueur d'onde à fibres optiques selon l'une des revendications 1 à 7, **caractérisé en ce que** le réseau de diffraction est porté sur un support pouvant être dilaté de façon à faire varier le pas du réseau.

9. Multiplexeur-démultiplexeur en longueur d'onde à fibres optiques selon la revendication 8, **caractérisé en ce que** le support du réseau est diélectrique.

**Claims**

1. Optical-fibre wavelength multiplexer/demultiplexer having an optical axis (10) and comprising:

   - a plane diffraction grating (7) having a plane of dispersion,
   - at least one input fibre (2) having an exit face,
   - at least one output fibre (3) having an entry face, and
   - means for the optical conjugation of the exit face of the input fibre (2) with the entry face of the output fibre (3), the said means for optical conjugation comprising reflective means which ensure that the grating operates in the Littrow configuration and which are responsible for folding the optical axis,

   the multiplexer/demultiplexer being **characterised in that**
   the means for optical conjugation have an input and output axis in the vicinity of which the exit face of the input fibre and the entry face of the output fibre are situated,

**in that** the reflective means comprise:

- a first mirror (4, 19) whose focus is situated at the ends of the input and output fibres (2, 3) and which converts a divergent light flux into a parallel light flux,
- a second mirror (8) which is positioned on the input and output axis of the means for optical conjugation between the ends of the fibres and the first mirror (4, 19) and which is inclined to the said axis and comprises a central opening which enables a light flux directed along this axis to pass through, and

**in that** the plane of the diffraction grating is parallel to the input and output axis of the means for optical conjugation.

2. Optical-fibre wavelength multiplexer/demultiplexer according to claim 1, **characterised in that** the first mirror (4, 19) is a spherical mirror.

3. Optical-fibre wavelength multiplexer/demultiplexer according to claim 2, **characterised in that** the spherical mirror (19) is secured to a doublet made up of two elements (20, 21) which are in contact at an interface (22) and which are responsible for correcting geometrical and chromatic aberrations.

4. Optical-fibre wavelength multiplexer/demultiplexer according to one of claims 1 to 3, **characterised in that** the multiplexer-demultiplexer comprises a set of associated optical elements, the diffraction grating being fixed to a lateral face of an element which has an axis parallel to the input and output axis of the means for optical conjugation.

5. Optical-fibre wavelength multiplexer/demultiplexer according to claim 4, **characterised in that** the optical elements are adhesive-bonded.

6. Optical-fibre wavelength multiplexer/demultiplexer according to claim 4, **characterised in that** the diffraction grating is fixed to the said elements by elastic joints.

7. Optical-fibre wavelength multiplexer/demultiplexer according to one of claims 1 to 3, **characterised in that** the multiplexer-demultiplexer comprises a set of associated optical elements and **in that** the diffraction grating is formed directly on one of the lateral faces of one of the said optical elements.

8. Optical-fibre wavelength multiplexer/demultiplexer according to one of claims 1 to 7, **characterised in that** the diffraction grating is carried on a support which can be expanded in such a way as to vary the pitch of the grating.

9. Optical-fibre wavelength multiplexer/demultiplexer according to claim 8, **characterised in that** the support for the grating is dielectric.

## Patentansprüche

1. Wellenlängen-Multiplexer-Demultiplexer mit Lichtleitfasern mit einer optischen Achse (10), Folgendes aufweisend:

- ein ebenes Beugungsgitter (7) mit einer Streuungsebene,
- mindestens eine Eingangsfaser (2) mit einer Ausgangsseite,
- mindestens eine Ausgangsfaser (3) mit einer Eingangsseite und
- Mittel zur optischen Konjugation der Ausgangsseite der Eingangsfaser (2) mit der Eingangsseite der Ausgangsfaser (3), wobei die Mittel zur optischen Konjugation reflektierende Mittel aufweisen, die das Funktionieren des Gitters in Littrow-Konfiguration sicherstellen und das Rückfalten der optischen Achse sicherstellen,

Multiplexer-Demultiplexer **dadurch gekennzeichnet,**
**dass** die Mittel zur optischen Konjugation eine Eingangs- und Ausgangsachse haben, in deren Nähe sich die Ausgangsseite der Eingangsfaser und die Eingangsseite der Ausgangsfaser befinden,
**dass** die reflektierenden Mittel Folgendes aufweisen:

- einen ersten Spiegel (4, 19), dessen Brennpunkt auf dem Niveau des Endes der Eingangsfasern (2) und Ausgangsfasern (3) plaziert ist, der einen divergenten Lichtstrom in einen parallelen Lichtstrom umwandelt,
- einen zweiten Spiegel (8), der auf der Eingangs- und Ausgangsachse der Mittel zur optischen Konjugation zwischen dem Ende der Fasern und dem ersten Spiegel (4, 19) platziert ist, der in Bezug auf die Achse geneigt ist und eine zentrale Öffnung aufweist, die das Durchgehen eines auf diese Achse gelenkten Lichtstroms erlaubt, und dass die Ebene des Beugungsgitters parallel zu der Eingangs- und Ausgangsachse der Mittel zur optischen Konjugation ist.

2. Wellenlängen-Multiplexer-Demultiplexer mit Lichtleitfasern nach Anspruch 1, **dadurch gekennzeichnet, dass** der erste Spiegel (4, 19) ein sphärischer Spiegel ist.

3. Wellenlängen-Multiplexer-Demultiplexer mit Lichtleitfasern nach Anspruch 2, **dadurch gekennzeich-**

**net, dass** der sphärische Spiegel (19) fest mit einem Dublett verbunden ist, das aus zwei Elementen (20, 21) in Berührung mit einer Schnittstelle (22) besteht und die Korrektur der geometrischen und chromatischen Aberrationen sicherstellt .

4.  Wellenlängen-Multiplexer-Demultiplexer mit Lichtleitfasern nach einem der Ansprüche 1 bis 3, **dadurch gekennzeichnet, dass** der Multiplexer-Demultiplexer aus einer Einheit optischer zusammengehörender Elemente besteht, wobei das Beugungsgitter auf einer Seitenfläche eines Elements befestigt ist, das eine Achse parallel zu der Eingangs- und Ausgangsachse der optischen Konjugationsmittel hat.

5.  Wellenlängen-Multiplexer-Demultiplexer mit Lichtleitefasern nach Anspruch 4, **dadurch gekennzeichnet, dass** die optischen Elemente beklebt sind.

6.  Wellenlängen-Multiplexer-Demultiplexer mit Lichtleitfasern nach Anspruch 4, **dadurch gekennzeichnet, dass** das Beugungsgitter auf den Elemente mit elastischen Verbindungen befestigt ist.

7.  Wellenlängen-Multiplexer-Demultiplexer mit Lichtleitfasern nach einem der Anspruche 1 bis 3, **dadurch gekennzeichnet, dass** der Multiplexer-Demultiplexer aus einer Einheit zusammengehörender optischer Elemente besteht, und dass das Beugungsgitter direkt auf einer der Seitenflächen eines dieser optischen Elemente ausgebildet ist.

8.  Wellenlängen-Multiplexer-Demultiplexer mit Lichtleitfasern nach einem der Ansprüche 1 bis 7, **dadurch gekennzeichnet, dass** das Beugungsgitter auf einem Träger getragen wird, der gedehnt werden kann, so dass der Schritt des Gitters variiert.

9.  Wellenlängen-Multiplexer-Demultiplexer mit Lichtleitfasern nach Anspruch 8, **dadurch gekennzeichnet, dass** der Träger des Gitters dielektrisch ist.

ART ANTERIEUR

ART ANTERIEUR

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2543768
- FR 2519148
- FR 2479981
- FR 2496260
- EP 0196963 A
- FR 9707128